(19) **Europäisches Patentamt**

**European Patent Office**

**Office européen des brevets**

(11) Veröffentlichungsnummer: **0 200 997**

**B1**

(12) **EUROPÄISCHE PATENTSCHRIFT**

(45) Veröffentlichungstag der Patentschrift: **06.06.90**

(21) Anmeldenummer: **86105664.6**

(22) Anmeldetag: **24.04.86**

(51) Int. Cl.⁵: **B 23 K 33/00**, B 23 K 26/00, B 23 K 31/02

54 **Verbindungsstelle zweier Dünnbleche.**

(30) Priorität: **30.04.85 DE 3515598**

(43) Veröffentlichungstag der Anmeldung:
**12.11.86 Patentblatt 86/46**

(45) Bekanntmachung des Hinweises auf die
Patenterteilung:
**06.06.90 Patentblatt 90/23**

(84) Benannte Vertragsstaaten:
**FR GB IT SE**

(56) Entgegenhaltungen:
**EP-A-0 177 945**
**CH-A- 366 205**
**DE-A-3 233 048**
**FR-A-2 088 563**

**PATENT ABSTRACTS OF JAPAN, Band 8, Nr. 104 (M-296)1541r, 16. Mai 1984; & JP-A-59 16 693 (KAZUMI SEISAKUSHO K.K.) 27.01.1984**

(73) Patentinhaber: **Bayerische Motoren Werke Aktiengesellschaft**
**Patentabteilung AJ-30 Postfach 40 02 40**
**Petuelring 130**
**D-8000 München 40 (DE)**

(72) Erfinder: **Weiser, Klaus**
**Dorfstrasse 24 b**
**D-8081 Kottgeisering (DE)**
Erfinder: **Faber, Wolfgang**
**Streitbergstrasse 26**
**D-8000 München 60 (DE)**
Erfinder: **Bernhard, Albert**
**Fasanenweg 2**
**D-8201 Tattenhausen (DE)**

(74) Vertreter: **Bücken, Helmut**
**Bayerische Motoren Werke Aktiengesellschaft**
**Postfach 40 02 40 Petuelring 130 - AJ-30**
**D-8000 München 40 (DE)**

Courier Press, Leamington Spa, England.

## Beschreibung

Die Erfindung bezieht sich auf eine Schweißverbindung zweier Dünnbleche der im Oberbegriff des ersten Anspruchs genannten Art.

Eine derartige Schweißverbindung beschreibt die DE—A1—32 33 048. Hieraus ist es bekannt, zwei Karosseriebleche dadurch zu verbinden, daß deren Randbereiche um 90° umgebördelt werden. Die beiden umgebördelten Randbereiche werden überlappend aufeinander gelegt und mit Hilfe von Widerstandschweißpunkten miteinander verbunden. Hierdurch soll der Vorteil erreicht werden, daß benachbarte Blechbereiche nicht in unzulässiger Weise erwärmt werden. Ebenso werden dadurch Biegspannungen auf den Blechoberflächen vermieden, die eine optisch glatte Außenfläche stören können.

Aufgabe der vorliegenden Erfindung ist es, eine Schweißverbindung bei Dünnblechen, wie sie beispielsweise an Innen- und Außenblechen für Türen und Klappen bei Kraftfahrzeugen verwendet werden, vorzuschlagen.

Diese Aufgabe wird erfindungsgemäß durch die Merkmale des ersten Patentanspruchs gelöst.

Diese Lösung geht von dem Gedanken aus, daß durch das Umbördeln des Außenbleches der Verzug, der trotz verzugsarmer Schweißverfahren auftritt, sich nicht negativ auf die sichtbare Außenfläche auswirkt. Daneben kann die Bördelung direkt beim Formen der Außenblechkontur hergestellt werden, so daß der letztendlich bisher notwendige Falzvorgang der fertig bearbeiteten Bleche entfallen kann.

Die Weiterbildung nach Anspruch 2 und 3 beschreibt sinnvolle und einfach herzustellende Anordnungen der Schweißnähte.

Bei der Weiterbildung nach Anspruch 4 wird durch das Umbördel auch des Innenblechs verhindert, daß sich dort der Verzug durch den Schweißvorgang bemerkbar macht. Darüber hinaus ist bei dieser Art der Schweißnaht und der Ausbildung der Bleche eine Versiegelung von Kanten aus Korrosionsschutzgründen nicht erforderlich.

Im folgenden wird die Erfindung anhand von bevorzugten Beispielen dargestellt.

Es stellen dar:

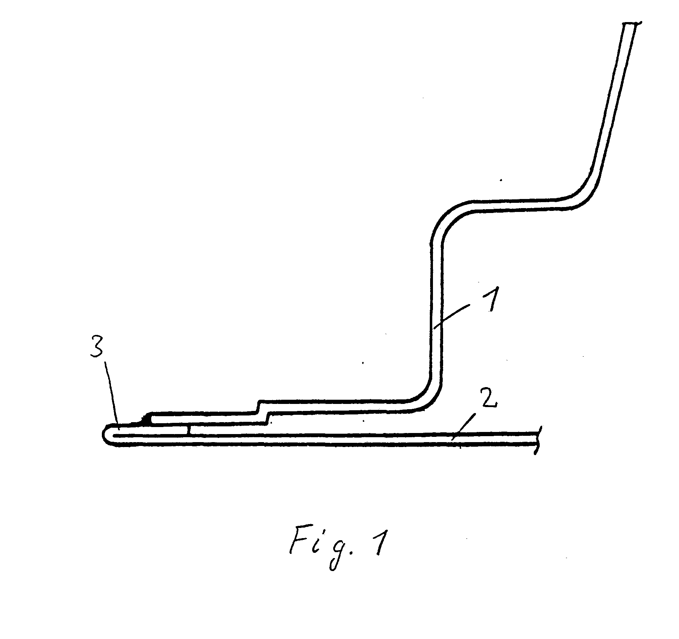

Fig. 1 bis 3 mittels Laserstrahl hergestellte Verbindungen zwischen zwei Dünnblechen.

In allen drei Beispielen wird ein Innenblech 1 mit einem Außenblech 2 zu einer Kraftfahrzeugtür verbunden. Hierzu wird das Außenblech in seinem Randbereich um 180° gebördelt, und zwar derart, daß der umgebördelte Rand 3 auf die Innenseite des Außenblechs bei fertiger Tür zu liegen kommt.

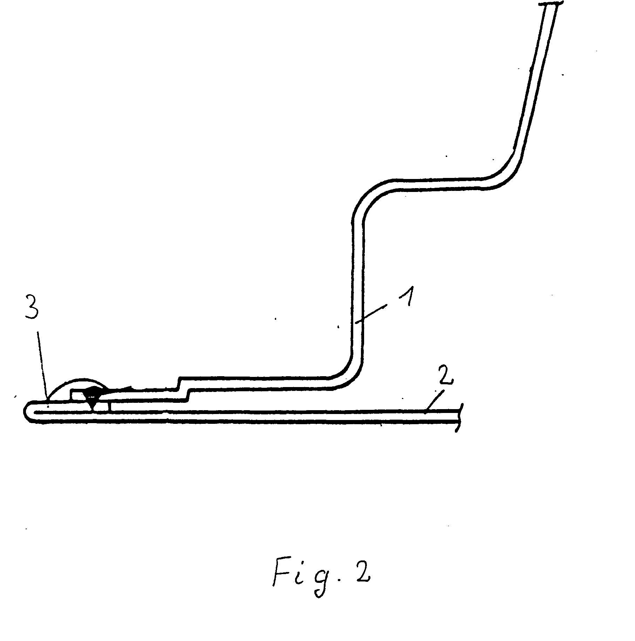

In Fig. 1 und 2 wird nun das Innenblech auf diesen umgebördelten Rand 3 gelegt und entweder stirnseitig mit Hilfe einer Kehlnaht mit dem umgebördelten Rand (Fig. 1) oder mit Hilfe einer Liniennaht mit dem umgebördelten Rand verbunden (Fig. 2). Im letztgenannten Beispiel steht die freie Stirnfläche des Innenblechs ungeschützt hervor und wird sinnvollerweise versiegelt, um sicherzustellen, daß absoluter Korrosionsschutz erreicht wird.

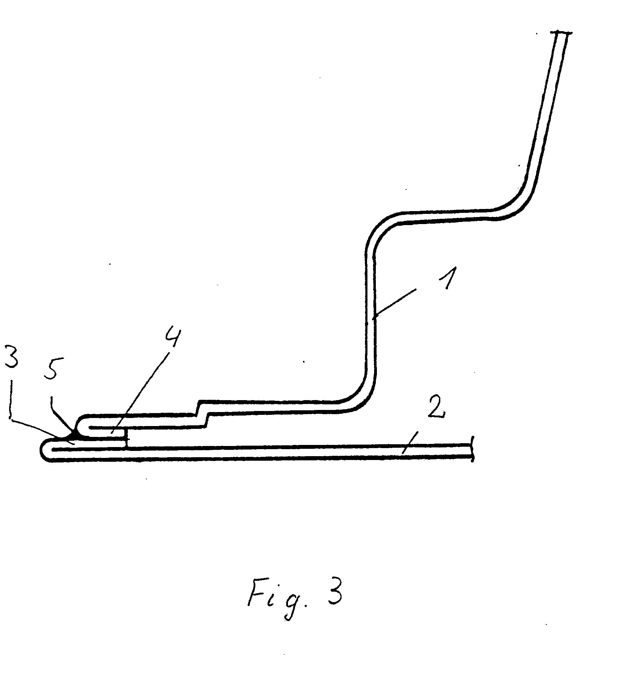

Die Ausbildung nach Fig. 3 unterscheidet sich von den bisherigen Ausführungsformen dadurch, daß auch das Innenblech 1 im Randbereich 4 um 180° gebördelt ist. Zum Verbinden der beiden Bleche werden die beiden umgebördelten Ränder 3, 4 aufeinander gelegt und dann in den Zwickel 5 mit Hilfe einer Kehlnaht verbunden. Diese Ausführung hat den Vorteil, daß keine Blechkanten hervorstehen, die versiegelt werden müssen. Darüber hinaus weist diese Ausführungsform den Vorteil auf, daß die Schweißnaht an den umgebördelten Randbereichen angreift, so daß aufgrund der Bördelung der sich einstellende minimale Verzug nicht auf die sichtbaren Außenseiten sich auswirken können. Dadurch entstehen wie bei einer Klebverbindung optisch glatte Oberflächen bei beiden Blechen.

## Patentansprüche

1. Schweißverbindung zweier Dünnbleche (1, 2), von denen ein Blech (2) eine optisch glatte Außenfläche bildet, wobei dieses Blech (2) in seinem Randbereich umgebördelt ist, dadurch gekennzeichnet, daß das die Außenfläche bildende Blech (2) um 180° auf seine rückwärtige Fläche umgebördelt ist, daß das die Innenfläche bildende Blech (1) auf den umgebördelten Rand (3) gelegt ist und die Verbindung zwischen diesem Blech (1) und dem umgebördelten Rand (3) mittels Laserstrahl von der der Außenflächen abgewandten Seite erfolgt.

2. Schweißverbindung nach Anspruch 1, dadurch gekennzeichnet, daß die Verbindung als Parallelstoßverbindung ausgeführt ist.

3. Schweißverbindung nach Anspruch 1, dadurch gekennzeichnet, daß eine Liniennaht vorgesehen ist.

4. Schweißverbindung nach Anspruch 1, dadurch gekennzeichnet, daß das die Innenfläche bildende Blech (1) ebenfalls um 180° in seinem Randbereich gebördelt ist, daß die beiden gebördelten Ränder (3, 4) aufeinandergelegt sind und daß die Schweißnaht in den zwischen den beiden gebördelten Rändern (3, 4) gebildeten Zwickel (5) angeordnet ist.

## Revendications

1. Liaison soudée de deux tôles minces (1, 2) dont une tôle (2) constitue une surface extérieure lisse du point de vue optique, cette tôle (2) étant rabattue au niveau de sa zone marginale, liaison caractérisée en ce que la tôle (2) qui présente la surface extérieure est rabattue de 180° contre sa surface arrière et en ce que la tôle (1) qui forme la surface intérieure est placée sur le bord rabattu (3) et la liaison entre cette tôle (1) et le bord rabattu (3) est réalisée à l'aide d'un faisceau-laser sur la face opposée au côté extérieur.

2. Liaison soudée selon la revendication 1, caractérisée en ce qu'elle est réalisée sous la forme d'une liaison en bout, parallèle.

3. Liaison soudée selon la revendication 1, caractérisée en ce qu'il est prévu un cordon linéaire.

4. Liaison soudée selon la revendication 1, caractérisée en ce que la tôle (1) qui forme la surface intérieure est également rabattue de 180° au niveau de sa zone marginale et les deux bords rabattus (3, 4) sont disposés l'un sur l'autre, le cordon de soudure étant réalisé dans la gorge (5) entre les deux bords rabattus (3, 4).

**Claims**

1. A welding connection of two thin metal sheets (1, 2), one metal sheet (2) of which forms a visually smooth outer surface, wherein this metal sheet (2) is flanged in its marginal region, characterised in that the metal sheet (2) forming the outer surface is flanged through 180° onto its rear surface, that the metal sheet (1) forming the inner surface is placed onto the flanged edge (3) and the connection between this metal sheet (1) and the flanged edge (3) takes place by means of a laser beam from the side facing away from the outer surfaces.

2. A welding connection according to Claim 1, characterised in that the connection is constructed as a parallel butt joint.

3. A welding connection according to Claim 1, characterised in that a line seam is provided.

4. A welding connection according to Claim 1, characterised in that the metal sheet (1) forming the inner surface is likewise flanged through 180° in its marginal region, that the two flanged edges (3, 4) are placed on each other and that the welding seam is arranged in the wedge (5) which is formed between the two flanged edges (3, 4).

EP 0 200 997 B1

Fig. 1

Fig. 2

Fig. 3